# EUROPÄISCHE PATENTSCHRIFT

(11) **EP 3 479 002 B1**
(45) Veröffentlichungstag und Bekanntmachung des Hinweises auf die Patenterteilung: **22.09.2021**
(21) Anmeldenummer: 17749107.3
(22) Anmeldetag: 28.06.2017
(51) Int. Cl.: F16L 23/00

(54) **VERFAHREN ZUM FÜGEN VON ROHRSTÜCKEN**
METHOD FOR JOINING PIPE PIECES
PROCÉDÉ D'ASSEMBLAGE D'ÉLÉMENTS TUBULAIRES

(30) Priorität: 29.06.2016 AT 505832016
(43) Veröffentlichungstag der Anmeldung: 08.05.2019
(73) Patentinhaber: agru Kunststofftechnik Gesellschaft m.b.H., 4540 Bad Hall (AT)
(72) Erfinder: GRUBER, Erich, 4407 Steyr-Gleink (AT); LUEGHAMER, Albert, 4522 Sierning (AT)
(74) Vertreter: Burger, Hannes
(86) Internationale Anmeldenummer: PCT/AT2017/060161
(87) Internationale Veröffentlichungsnummer: WO 2018/000010

(56) Entgegenhaltungen:
- WO-A2-2011/055100
- CN-U- 202 247 135
- DE-A1-102015 210 486
- KR-U- 20140 003 489
- US-A1- 2006 021 834

## Beschreibung

Die Erfindung betrifft ein Verfahren zum Zusammenbau einer Armatur mit einem Rohrstück mittels einer Flanschverbindung, sowie ein Verfahren zum Zusammenbau von zwei Rohrstücken mittels einer Flanschverbindung.

Die US 4,079,746 A bzw. die daraus hervorgegangene DE 26 58 671 A beschreiben ein Absperrorgan für Rohrleitungen, insbesondere eine Drosselklappe, mit einer Anordnung zur Befestigung des Absperrorgans zwischen zwei Flanschanschlüssen. Jeder der Flanschanschlüsse weist einen Strömungskanal auf und ist mit einem ringförmigen, radial vom Strömungskanal abstehenden Flansch ausgestattet. Das Absperrorgan weist einen Gehäusekörper mit einem Strömungsdurchlass auf, innerhalb welchem ein Absperrelement angeordnet ist. Das Absperrelement ist zwischen einer ersten, den Strömungsdurchlass schließenden Position in eine zweite, den Strömungsdurchlass öffnenden Position verlagerbar. Am Gehäusekörper ist eine Adaptereinrichtung befestigt. Zur fluchtenden Ausrichtung zwischen der Adaptereinrichtung und den Flanschen sind Ausrichtmittel in Form von Bolzen oder Schrauben vorgesehen, um die Strömungskanäle innerhalb der Flansche und den Strömungsdurchlass gegenseitig auszurichten. Nachteilig dabei ist, dass die am Gehäusekörper des Absperrorgans befestigte Adaptereinrichtung auch nach dem gegenseitigen Ausrichten und Verbinden der Rohrleitungen weiterhin am Absperrorgan verbleibt.

Aus der DE 38 04 498 A1 sind ein Verfahren zum Fügen von Flanschen mit einer glatten Dichtleiste unter Zwischenschaltung einer mit der Außenkante der Dichtleiste abschließenden Flachdichtung zu einer Flanschverbindung sowie geeignete Mittel für die Durchführung des Verfahrens bekannt geworden. Zum Ausrichten der Flachdichtung werden in zumindest zwei versetzt angeordnete Bohrungen Justierbolzen mit einem engen Radialspiel soweit eingeführt, bis der zwischen den Flanschen gebildet Spalt überbrückt ist. Dann wird die Flachdichtung in einen zwischen den Flanschen gebildeten Spalt eingesetzt und an den Justierbolzen angelegt und damit ausgerichtet. Anschließend werden eine Mehrzahl von Schrauben durch gleichmäßig über den Umfang der Flansche angeordnete Bohrungen mit Ausgleichsspiel hindurchgeführt und mit Muttern zu Schraubverbindungen vereinigt. Eine gegenseitige Ausrichtung der in den Flanschen angeordneten Bohrungen ist nicht möglich. Nach dem Entfernen der Justierbolzen werden diese ebenfalls durch eine Schraubverbindung ersetzt.

Die DE 10 2015 210486 A1 offenbart eine Flanschverbindung mit zwei geteilt ausgeführten Losflanschen.

Die CN 202 247 135 U offenbart im Gebiet der Textilmaschinen eine Winkelarmvorrichtung einer Greiferwebmaschine.

Die WO 2011/055100 A2 offenbart eine Haltevorrichtung zum Halten länglicher Gegenstände.

Die US 2006/0021834 A1 offenbart eine Trommelbremse.

Die KR 2014 0003489 U offenbart eine Halterung für einen Rohrstrang.

Aufgabe der vorliegenden Erfindung war es, die Nachteile des Standes der Technik zu überwinden und Verfahren zur Verfügung zu stellen, mittels derer ein Benutzer in der Lage ist, einen einfachen Zusammenbau einer Armatur mit einem Rohrstück oder von zwei Rohrstücken und der gegenseitigen Fixierung mittels einer Flanschverbindung vorzunehmen und dabei nach dem Ausrichten und dem Zusammenbau dieselbe Zentriervorrichtung erneut für einen weiteren Ausrichtvorgang einsetzen zu können.

Diese Aufgabe wird durch gleichwirkende Verfahren gemäß den Ansprüchen gelöst.

Bei einem ersten möglichen Verfahren zum Zusammenbau einer Armatur, insbesondere einer Absperrklappe, eines Drosselventils oder eines Schmetterlingsventils, mit einem Rohrstück und mit einer Flanschverbindung, sind folgende Verfahrensschritte vorgesehen oder sind folgende Schritte durchzuführen:
- Bereitstellen der Armatur mit einer ebenen Dichtfläche und mehreren über den äußeren Umfang verteil angeordneten Aufnahmeöffnungen, wobei die Dichtfläche in senkrechter Richtung bezüglich einer Längsachse der Armatur ausgerichtet ist;
- Bereitstellen eines Rohrstücks mit einer der Dichtfläche der Armatur zuwendbaren Stirnfläche und mit einem Bund, wobei der Bund an seinem äußeren Umfang mit einer äußeren Bundfläche ausgebildet ist und die Stirnfläche bezüglich einer Längsachse des Rohrstücks in senkrechter Richtung dazu ausgerichtet ist;
- Bereitstellen eines losen Flanschrings mit mehreren über den Umfang verteilt angeordneten Durchgangsöffnungen;
- Bereitstellen einer Zentriervorrichtung, umfassend zumindest zwei Zentrierelemente und zumindest vier Zentrierbolzen, wobei in den Zentrierelementen jeweils zumindest zwei Zentrieröffnungen ausgebildet sind und die Zentrieröffnungen jeweils in einem gleichen Normalabstand von zwei in Umfangsrichtung hintereinander angeordneten Aufnahmeöffnungen der Armatur sowie von zwei in Umfangsrichtung hintereinander angeordneten Durchgangsöffnungen des losen Flanschrings angeordnet sind und jedes der Zentrierelemente mit einer der äußeren Bundfläche des Bundes zuwendbaren Ausrichtfläche ausgebildet ist;
- Bereitstellen von mehreren Verbindungselementen, welche Verbindungselemente zur Verbindung des losen Flanschrings mit der Armatur dienen;
- voneinander umfänglich distanziertes Anordnen der zumindest zwei Zentrierelemente an der Armatur in einer koaxialen Lage von deren Zentrieröffnungen bezüglich den Aufnahmeöffnungen in der Armatur;
- Einsetzen der Zentrierbolzen in die Zentrieröffnungen der Zentrierelemente sowie in die Aufnahmeöffnungen der Armatur;
- Verbringen des Rohrstücks zwischen die zumindest zwei Zentrierelemente und dabei Ausrichten der äußeren Bundfläche des Bundes an den Ausrichtflächen der Zentrierelemente;
- Aufsetzen des losen Flanschrings über das Rohrstück und Ausrichten des losen Flanschrings an den Zentrierbolzen, indem die Zentrierbolzen von den jeweiligen Durchgangsöffnungen des losen Flanschrings aufgenommen werden;
- Einsetzen von mehreren der Verbindungselemente in noch freie Durchgangsöffnungen des losen Flanschrings sowie in die dazu korrespondierenden Aufnahmeöffnungen der Armatur und Festziehen der Verbindungselemente;
- Entfernen der Zentriervorrichtung;
- Einsetzen von weiteren Verbindungselementen in die restlichen, noch freien Durchgangsöffnungen des losen Flanschrings sowie die dazu korrespondierenden Aufnahmeöffnungen der Armatur und Festziehen der weiteren Verbindungselemente.

Vorteilhaft ist bei diesem Vorgehen, dass bei diesem hier gewählten Vorgehen zum Zusammenbau oder Fügen einer Armatur mit einem Rohrstück und dem nachfolgenden miteinander verbinden mittels einer Flanschverbindung durch die gewählte Zentrier- oder Ausrichtvorrichtung auf einfache Art und Weise die gegenseitige Ausrichtung aller zu fügenden Bauteile, nämlich der Armatur, dem Rohrstück sowie dem losen Flanschring, bei einer ausreichend exakten gegenseitigen Positionierung zueinander für den nachfolgenden Verbindungsvorgang der Flanschverbindung geschaffen werden kann. Da die Zentrier- oder Ausrichtvorrichtung vor dem Fügevorgang bereits an einem der zu fügenden Bauteile, im vorliegenden Ausführungsbeispiel an der Armatur, angebracht und gehalten werden kann, können damit in weiterer Folge auch alle weiteren Bauteile damit ausgerichtet und positioniert werden. Damit kann so der Ausricht- und Fügevorgang vereinfacht werden. Darüber hinaus kann aber auch nach dem erfolgten Fügevorgang und einer teilweisen Verbindung der Flanschverbindung die Zentrier- oder Ausrichtvorrichtung von den miteinander zu fügenden Bauteilen vollständig entfernt werden und damit die weiteren Verbindungselemente zur Bildung der vollständigen Flanschverbindung angebracht werden. Durch die vollständige Wegnahme Möglichkeit der Zentriervorrichtung verbleiben keine unnötigen Bauteile im Bereich der miteinander zusammen zu bauenden Komponenten und es ist eine Mehrfachverwendung derselben somit möglich.

Weiters ist ein Vorgehen vorteilhaft, bei dem die Längsachse des Rohrstücks in koaxialer Ausrichtung bezüglich der Längsachse der Armatur ausgerichtet wird. Damit kann eine exakte zueinander fluchtende Ausrichtung der in Axialrichtung hintereinander angeordneten zu fügenden Bauteile erreicht werden.

Eine weitere vorteilhafte Vorgehensweise ist dadurch gekennzeichnet, dass zwischen der Dichtfläche der Armatur und der dieser zugewendeten Stirnfläche des Rohrstücks zumindest ein Dichtelement eingesetzt wird. Durch das Vorsehen zumindest eines zusätzlichen Elements kann so eine noch bessere Dichtwirkung und Abdichtung der miteinander zu fügenden Bauteile erzielt werden. Bei einer in etwa gleichen Wahl der Außenabmessung des Dichtelements bezüglich des Bundes des Rohrstücks kann das zumindest eine Dichtelement beim Zusammenbau gleich mit der Verwendung der Zentriervorrichtung ausgerichtet oder zentriert werden, ohne dass dazu ein gesonderter Vorgang bzw. eine zusätzliche Vorrichtung notwendig ist.

Vorteilhaft ist auch eine Verfahrensvariante, bei welcher die in der Armatur angeordneten Aufnahmeöffnungen von Gewindebohrungen gebildet sind. Damit kann der Zusammenbau der zu fügenden Bauteile wesentlich vereinfacht werden, da die Verbindungselemente lediglich in die Gewindebohrungen eingeschraubt und für die klemmende Verbindung festzuziehen sind.

Eine andere Vorgehensweise zeichnet sich dadurch aus, wenn die Zentrierbolzen der Zentriervorrichtung jeweils mit einem ersten Teilabschnitt und einem daran in Axialrichtung anschließenden zweiten Teilabschnitt ausgebildet sind, wobei der erste Teilabschnitt mit einem Au-ßengewinde versehen ist und der zweite Teilabschnitt glatt und zylinderförmig ausgebildet ist. Durch die spezielle Ausbildung der Zentrierbolzen kann so der Montagevorgang derselben an einem der zu fügenden Bauteile erleichtert werden und anschließend trotzdem eine ausreichend exakte gegenseitige Zentrierung und Ausrichtung des Zentrier- oder Ausrichtelements sowie des losen Flanschrings erleichtert werden. Bei einer entsprechenden Wahl der Axialerstreckung durchragt der Zentrierbolzen bevorzugt den losen Flanschring, um die nachfolgende Wegnahme und Loslösen von der Armatur einfacher durchführen zu können.

Weiters ist ein Vorgehen vorteilhaft, bei dem die Zentrierbolzen der Zentriervorrichtung jeweils an deren vom ersten Teilabschnitt abgewendeten Seite mit einem vierkantigen oder einem sechskantigen Querschnitt ausgebildet sind. Durch das Vorsehen eines mehrkantigen, insbesondere vierkantigen oder sechskantigen Ansatzes am Zentrierbolzen kann sowohl der Befestigungsvorgang als auch der Lösevorgang mittels eines Handwerkzeugs oder aber auch einer maschinell bedienten und/oder gesteuerten Betätigungsvorrichtung erleichtert und sicher durchgeführt werden.

Eine weitere vorteilhafte Vorgehensweise ist dadurch gekennzeichnet, dass bei einer auf dem Bund des Rohrstücks in Axialrichtung aufliegenden Stellung des losen Flanschrings zwischen zumindest einer den Zentrierelementen zugewendeten Flanschfläche und den Zentrierelementen ein Axialspalt ausgebildet wird. Durch die in Axialrichtung geringere Axialerstreckung der Zentrier- oder Ausrichtelemente kann so ein Verklemmen derselben zwischen den zu fügenden Bauteilen vermieden werden. Dadurch kann aber auch die Wegnahme bei bereits festgezogener Flanschverbindung immer noch durchgeführt werden.

Unabhängig davon kann aber auch die Aufgabe der Erfindung durch ein Verfahren zum Zusammenbau von zwei Rohrstücken und einer Flanschverbindung dadurch gelöst werden, wenn folgende Schritte durchgeführt werden:
- Bereitstellen eines ersten Rohrstücks mit einer ersten Stirnfläche und mit einem ersten Bund, wobei der erste Bund an seinem äußeren Umfang mit einer ersten äußeren Bundfläche ausgebildet ist und die erste Stirnfläche bezüglich einer ersten Längsachse des ersten Rohrstücks in senkrechter Richtung dazu ausgerichtet ist;
- Bereitstellen eines zweiten Rohrstücks mit einer zweiten Stirnfläche und mit einem zweiten Bund, wobei der zweite Bund an seinem äußeren Umfang mit einer zweiten äußeren Bundfläche ausgebildet ist und die zweite Stirnfläche bezüglich einer zweiten Längsachse des zweiten Rohrstücks in senkrechter Richtung dazu ausgerichtet ist;
- Bereitstellen eines ersten losen Flanschrings mit mehreren über den Umfang verteilt angeordneten ersten Durchgangsöffnungen;
- Bereitstellen eines zweiten losen Flanschrings mit mehreren über den Umfang verteilt angeordneten zweiten Durchgangsöffnungen;
- Bereitstellen einer Zentriervorrichtung, umfassend zumindest zwei Zentrierelemente und zumindest vier Zentrierbolzen, wobei in den Zentrierelementen jeweils zumindest zwei Zentrieröffnungen ausgebildet sind und die Zentrieröffnungen jeweils in einem gleichen Normalabstand von zwei in Umfangsrichtung hintereinander angeordneten ersten und zweiten Durchgangsöffnungen der beiden Flanschringe angeordnet sind und jedes der Zentrierelemente mit einer der ersten und der zweiten äußeren Bundfläche der ersten und zweiten Bunde zuwendbaren Ausrichtfläche ausgebildet ist;
- Bereitstellen von mehreren Verbindungselementen, welche Verbindungselemente zur Verbindung des ersten losen Flanschrings mit dem zweiten losen Flanschring dienen;
- voneinander umfänglich distanziertes Anordnen der zumindest zwei Zentrierelemente am ersten losen Flanschring in einer koaxialen Lage von deren Zentrieröffnungen bezüglich der ersten Durchgangsöffnungen des ersten losen Flanschrings;
- Einsetzen der Zentrierbolzen in die Zentrieröffnungen der Zentrierelemente sowie in die ersten Durchgangsöffnungen des ersten losen Flanschrings und fixieren der zumindest zwei Zentrierelemente sowie der Zentrierbolzen am ersten losen Flanschring;
- Verbringen des ersten Rohrstücks zwischen die zumindest zwei Zentrierelemente und dabei Ausrichten der äußeren ersten Bundfläche des ersten Bundes an den Ausrichtflächen der Zentrierelemente;
- Verbringen des zweiten Rohrstücks zwischen die zumindest zwei Zentrierelemente und dabei Ausrichten der äußeren zweiten Bundfläche des zweiten Bundes an den Ausrichtflächen der Zentrierelemente;
- Aufsetzen des zweiten losen Flanschrings über das zweite Rohrstück und Ausrichten des zweiten losen Flanschrings an den Zentrierbolzen, indem die Zentrierbolzen von den jeweiligen zweiten Durchgangsöffnungen des zweiten losen Flanschrings aufgenommen werden;
- Einsetzen von mehreren der Verbindungselemente in noch freie erste Durchgangsöffnungen des ersten losen Flanschrings sowie in die dazu korrespondierenden ebenfalls noch freien zweiten Durchgangsöffnungen des zweiten losen Flanschrings und Festziehen der Verbindungselemente;
- Entfernen der Zentriervorrichtung;
- Einsetzen von weiteren Verbindungselementen in die restlichen, noch freien ersten Durchgangsöffnungen des ersten Flanschrings sowie in die dazu korrespondierenden ebenfalls noch freien zweiten Durchgangsöffnungen des zweiten losen Flanschrings und Festziehen der weiteren Verbindungselemente.

Bei diesen Verfahrensschritten ist vorteilhaft, dass zum Zusammenbau oder Fügen von zwei Rohrstücken und dem nachfolgenden miteinander verbinden mittels einer Flanschverbindung durch die gewählte Zentrier- oder Ausrichtvorrichtung auf einfache Art und Weise die gegenseitige Ausrichtung aller zu fügenden Bauteile, nämlich den beiden Rohrstücken sowie den losen Flanschringen, bei einer ausreichend exakten gegenseitigen Positionierung zueinander für den nachfolgenden Verbindungsvorgang der Flanschverbindung geschaffen werden kann. Da die Zentrier- oder Ausrichtvorrichtung vor dem Fügevorgang bereits an einem der zu fügenden Bauteile, im vorliegenden Ausführungsbeispiel an einem der Flanschringe, angebracht und gehalten werden kann, können damit in weiterer Folge auch alle weiteren Bauteile damit ausgerichtet und positioniert werden. Damit kann so der Ausricht- und Fügevorgang vereinfacht werden. Darüber hinaus kann aber auch nach dem erfolgten Fügevorgang und einer teilweisen Verbindung der Flanschverbindung die Zentrier- oder Ausrichtvorrichtung von den miteinander zu fügenden Bauteilen vollständig entfernt werden und so die weiteren Verbindungselemente zur Bildung der vollständigen Flanschverbindung angebracht werden. Durch die vollständige Wegnahme Möglichkeit der Zentriervorrichtung verbleiben keine unnötigen Bauteile im Bereich der miteinander zusammen zu bauenden Komponenten und es ist eine Mehrfachverwendung derselben somit möglich.

Vorteilhaft ist auch eine Verfahrensvariante, bei welcher die beiden Rohrstücke beim Verbringen zwischen die zumindest zwei Zentrierelemente in eine an deren Stirnflächen aneinander liegende Stellung verbracht werden. Damit kann nachfolgend ein einfaches Festziehen der Flanschverbindung und damit ein verkantungsfreies aneinander Anliegen der beiden Rohrstücke erzielt werden.

Eine andere Vorgehensweise zeichnet sich dadurch aus, wenn die erste Längsachse des ersten Rohrstücks in koaxialer Ausrichtung bezüglich der zweiten Längsachse des zweiten Rohrstücks ausgerichtet wird. Damit kann eine exakte zueinander fluchtende Ausrichtung der in Axialrichtung hintereinander angeordneten zu fügenden Bauteile erreicht werden.

Weiters ist ein Vorgehen vorteilhaft, bei dem zwischen der ersten Stirnfläche des ersten Rohrstücks und der dieser zugewendeten zweiten Stirnfläche des zweiten Rohrstücks zumindest ein Dichtelement eingesetzt wird. Durch das Vorsehen zumindest eines zusätzlichen Elements kann so eine noch bessere Dichtwirkung und Abdichtung der miteinander zu fügenden Bauteile erzielt werden. Bei einer in etwa gleichen Wahl der Außenabmessung des Dichtelements bezüglich des Bundes der jeweiligen Rohrstücke kann das zumindest eine Dichtelement beim Zusammenbau gleich mit der Verwendung der Zentriervorrichtung ausgerichtet oder zentriert werden, ohne dass dazu ein gesonderter Vorgang bzw. eine zusätzliche Vorrichtung notwendig ist.

Eine weitere vorteilhafte Vorgehensweise ist dadurch gekennzeichnet, dass bei einer auf dem ersten Bund des ersten Rohrstücks aufliegenden Stellung des ersten losen Flanschrings und bei einer auf dem zweiten Bund des zweiten Rohrstücks aufliegenden Stellung des zweiten losen Flanschrings zwischen den Zentrierelementen und zumindest einer den Zentrierelementen zugewendeten Flanschfläche ein Axialspalt ausgebildet wird. Durch die in Axialrichtung geringere Axialerstreckung der Zentrier- oder Ausrichtelemente kann so ein Verklemmen derselben zwischen den zu fügenden Bauteilen vermieden werden. Dadurch kann aber auch die Wegnahme bei bereits festgezogener Flanschverbindung immer noch durchgeführt werden.

Vorteilhaft ist auch eine Verfahrensvariante, bei welcher bei einer gewählten Anzahl von zwei Zentrierelementen die Zentrierelemente in einer zueinander diametralen Lage angeordnet werden. Durch die zueinander diametrale und damit einander gegenüberliegende Anordnung der beiden Zentrierelemente kann so eine ausreichend genaue Positionierung zueinander erzielt werden.

Eine andere Vorgehensweise zeichnet sich dadurch aus, wenn bei einer gewählten Anzahl von mehr als zwei Zentrierelementen die Zentrierelemente über den Umfang verteilt angeordnet werden, insbesondere gleichmäßig über den Umfang verteilt angeordnet werden. Dadurch kann auch bei größeren Außenabmessungen und Dimensionen der zu fügenden Bauteile eine exakte Ausrichtung und Zentrierung zueinander erzielt werden.

Eine weitere vorteilhafte Vorgehensweise ist dadurch gekennzeichnet, dass die Ausrichtfläche des Zentrierelements durch einen Teilabschnitt einer Hohlzylinderfläche gebildet ist. Bei entsprechend gewählten Toleranzen zueinander kann so eine sehr exakte Ausrichtung und Positionierung, insbesondere der Rohrstücke mit deren daran angeordneten Bund, erzielt werden.

Vorteilhaft ist auch eine Verfahrensvariante, bei welcher die Ausrichtfläche des Zentrierelements von zwei in einem Winkel aufeinander zulaufend ausgerichtete, ebenflächige Ausrichtteilflächen gebildet ist. Durch die aufeinander zulaufend ausgerichteten Ausrichtteilflächen kann insbesondere bei rund ausgebildeten zu zentrierenden Körpern eine vom Durchmesser in weiten Bereichen unabhängige Verwendung von gleichen Zentrierelementen ermöglicht werden. Die Ausrichtteilflächen am Zentrierelement bilden einen V-Ausschnitt, um so nicht nur eine Mehrfachverwendung durch die Wegnahme Möglichkeit der Zentrierelemente zu schaffen, sondern auch eine Mehrfachverwendung bei zueinander unterschiedlichen Außenabmessungen, insbesondere Durchmessern der Rohrstücke mit deren Bund, zu ermöglichen.

Weiters kann vorgesehen sein, dass es durch eine Zentrier- und Ausrichtvorrichtung möglich ist, eine ausreichend exakte zueinander Positionierung der zu fügenden Bauteile zu erzielen und im teilweise miteinander verbundenen Zustand der Bauteile die Zentrier- und Ausrichtvorrichtung nach dem Positionier- oder Zentriervorgang wegnehmen und erneut verwenden und einsetzen zu können. Dadurch können Materialressourcen eingespart werden, da durch die Kombination von Zentrierelementen und Zentrierbolzen auch Rohrstücke zueinander positioniert ausgerichtet werden können, bei welchen eine radiale Distanz zwischen der äußeren Bundfläche des Bundes am Rohrstück und den Aufnahmeöffnungen für die Zentrierbolzen vorhanden ist. Diese radiale Distanz kann durch entsprechende Ausbildung und maßliche Auswahl der Zentrierelemente überbrückt werden. Damit können vorhandene und für die spätere Verbindung der zu fügenden Bauteile darin angeordnete bzw. vorgesehene Öffnungen bzw. Durchbrüche nicht nur für die gegenseitige, nachfolgende Verbindung, sondern auch für den Ausricht- und Zentriervorgang mitverwendet werden.

Weiters kann es vorteilhaft sein, wenn die Ausrichtfläche des Zentrierelements durch einen Teilabschnitt einer Hohlzylinderfläche gebildet ist. Bei entsprechend gewählten Toleranzen zueinander kann so eine sehr exakte Ausrichtung und Positionierung, insbesondere der Rohrstücke mit deren daran angeordneten Bund, erzielt werden.

Schließlich kann sich eine andere Ausführungsform dadurch auszeichnen, wenn die Ausrichtfläche des Zentrierelements von zwei in einem Winkel aufeinander zulaufend ausgerichtete, ebenflächige Ausrichtteilflächen gebildet ist. Durch die aufeinander zulaufend ausgerichteten Ausrichtteilflächen kann insbesondere bei rund ausgebildeten zu zentrierenden Körpern eine vom Durchmesser in weiten Bereichen unabhängige Verwendung von gleichen Zentrierelementen ermöglicht werden. Die Ausrichtteilflächen am Zentrierelement bilden im Querschnitt gesehen einen V-Ausschnitt aus. Dadurch kann nicht nur eine Mehrfachverwendung durch die Wegnahme Möglichkeit der Zentrierelemente geschaffen werden, sondern auch eine mehrfache Verwendungsmöglichkeit bei zueinander unterschiedlichen Außenabmessungen, insbesondere Durchmessern der Rohrstücke mit deren Bund, ermöglicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine erste mögliche Ausbildung einer Zentrier- oder Ausrichtvorrichtung, in Ansicht;
- Fig. 2: eine zweite mögliche Ausbildung einer Zentrier- oder Ausrichtvorrichtung, in Ansicht;
- Fig. 3: eine dritte mögliche Ausbildung einer Zentrier- oder Ausrichtvorrichtung, in Ansicht;
- Fig. 4: einen Zentrierbolzen der Zentrier- oder Ausrichtvorrichtung nach den Fig. 1 bis 3;
- Fig. 5: eine für den Zusammenbau vorgesehene Armatur mit einem Rohrstück in noch voneinander distanzierter Stellung der zu fügenden Bauteile, in schaubildlicher Darstellung;
- Fig. 6: ein erstes und ein zweites für den Zusammenbau vorgesehenes Rohrstück in noch voneinander distanzierter Stellung der zu fügenden Bauteile, in schaubildlicher Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

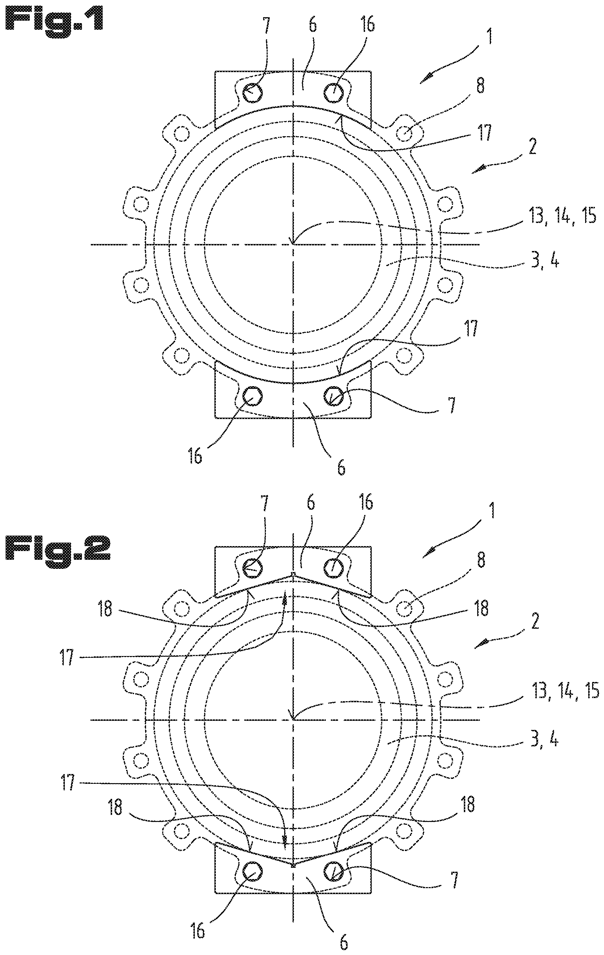

In den ersten Fig. 1 bis 4 sind mögliche Ausbildungen und Anordnungen einer Zentriervorrichtung 1 gezeigt, welche entweder für den Zusammenbau einer Armatur 2 mit einem Rohrstück 3, 4, oder für den Zusammenbau von zwei Rohrstücken 3, 4 mittels einer nachfolgend noch näher beschriebenen, jedoch hier nicht näher dargestellten Flanschverbindung 5 eingesetzt bzw. verwendet werden können. Die Zentriervorrichtung 1 kann aber auch als Ausrichtvorrichtung bezeichnet werden, mittels welcher es möglich ist, ein Rohrstück 3, 4 bezüglich der Armatur 2 in seiner axialen Lage und Position auszurichten und in dieser Position bis zur gegenseitigen Verbindung aneinander mittels der Flanschverbindung 5 zu halten. Gleiches gilt aber auch für den Zusammenbau und die Ausrichtung von zwei Rohrstücken 3, 4 relativ zueinander.

Nachfolgend wird unter dem Begriff der Armatur 2 insbesondere unter anderem eine Absperrklappe, ein Drosselventil oder ein Schmetterlingsventil verstanden. Als Rohrstücke 3, 4 werden insbesondere Rohre aus Kunststoff - also Kunststoffrohre - und/oder auch Rohre aus metallischen Werkstoffen in den unterschiedlichsten Längen bzw. Axialerstreckungen verstanden. Bei den Rohrstücken kann es sich auch z.B. um Kunststoffrohre mit zumindest einem Vorschweißbund handeln.

Bei der Darstellung einer ersten Ausführungsmöglichkeit gemäß der Fig. 1 ist gezeigt, dass die Zentriervorrichtung 1 zwei Zentrierelemente 6 aufweist bzw. zwei Zentrierelemente 6 vorgesehen sind. Das oder die Zentrierelemente 6 können aber auch als Ausrichtelemente bezeichnet werden. In jedem der Zentrierelemente 1 sind jeweils zumindest zwei Zentrieröffnungen 7 ausgebildet oder angeordnet. Die zumindest zwei Zentrieröffnungen 7 sind mit zwei in der zu zentrierenden Armatur 2 angeordneten Aufnahmeöffnungen 8 korrespondierend dazu angeordnet. Sollen hingegen zwei Rohrstücke 3, 4 zueinander ausgerichtet oder zueinander zentriert werden, sind die zumindest zwei Zentrieröffnungen 7 in korrespondierender Anordnung zu später noch näher beschriebenen Durchgangsöffnungen 9, 10 in Flanschringen 11, 12 anzuordnen oder auszubilden.

Weiters ist hier noch dargestellt, dass die nur schemenhaft dargestellte Armatur 2 eine Längsachse 13 aufweist bzw. definiert. Gleiches gilt aber auch für die beiden zuvor beschriebenen und schematisch angedeuteten Rohrstücke 3, 4, welche ihrerseits ebenfalls jeweils eigene Längsachsen 14, 15 bilden bzw. definieren. Weiters umfasst die Zentriervorrichtung 1 für jede der zumindest zwei Zentrieröffnungen 7 der zumindest zwei Zentrierelemente 6 jeweils einen Zentrierbolzen 16. Weist jedes der zumindest zwei Zentrierelemente 6 jeweils zwei Zentrieröffnungen 7 auf, so sind mindestens vier Zentrierbolzen 16 vorzusehen. Dabei ist dann in jeder der zumindest zwei Zentrieröffnungen 7 jedes der Zentrierelemente 6 jeweils einer der Zentrierbolzen 16 aufgenommen. Zur Ausbildung der Zentriervorrichtung 1 sind die zumindest zwei Zentrierelemente 6 in Umfangsrichtung bzw. umfänglich bezüglich einer Längsachse 14, 15 des zu zentrierenden Rohrstücks 3, 4 zueinander versetzt angeordnet. Dabei ist die umfänglich distanzierte Anordnung derart zu wählen, dass von den zumindest zwei Zentrierelementen 6 eine einwandfreie Ausrichtung und/oder Zentrierung des auszurichtenden oder zu zentrierenden Rohrstücks 3, 4 möglich ist.

Um als Zentrierelement 6 zu dienen, weist jedes der Zentrierelemente 6 zumindest eine Ausrichtfläche 17 auf. Jede der Ausrichtflächen 17 ist dabei der Längsachse 14, 15 zugewendet bzw. zuwendbar und weist bevorzugt eine in paralleler Richtung bezüglich der Längsachse 14, 15 verlaufende Axialerstreckung auf. An diesen Ausrichtflächen 17 kann dann die später beschriebene Ausrichtung oder Zentrierung des Rohrstücks 3, 4 erfolgen. Bei dem in der Fig. 1 gezeigten Ausführungsbeispiel ist die Ausrichtfläche 17 jedes der Zentrierelemente 6 durch einen Teilabschnitt einer Hohlzylinderfläche gebildet.

In der Fig. 2 ist grundsätzlich die gleiche Anordnung der Zentriervorrichtung 1 wie zuvor beschrieben dargestellt, welche wiederum die zumindest zwei Zentrierelemente 6 sowie die zumindest vier Zentrierbolzen 16 umfasst.

Im Gegensatz zu der zuvor in Fig. 1 beschriebenen Ausführungsform ist hier lediglich eine andere Ausbildung der Ausrichtfläche 17 an den Zentrierelementen 6 vorgesehen. Anstatt des Teilabschnitts der Hohlzylinderfläche ist bei diesem Ausführungsbeispiel die Ausrichtfläche 17 durch zwei in einem Winkel aufeinander zulaufend ausgerichtete, bevorzugt ebenflächige Ausrichtteilflächen 18 gebildet. Durch diese ebenflächig ausgerichteten bzw. aufeinander zulaufenden Ausrichtteilflächen 18 kann eine höhere Flexibilität der einzelnen Zentrierelemente 6 erreicht werden, da so auch Rohrstücke 3, 4 mit einer unterschiedlichen Außenabmessung und damit Dimension an den einzelnen Ausrichtteilflächen 18 angelegt und so ausgerichtet oder zentriert werden können.

Sind, wie in den beiden Fig. 1 und 2 gezeigt, zur Bildung der Zentriervorrichtung 1 eine Anzahl von zwei Zentrierelementen 6 gewählt, kann die umfängliche Anordnung der Zentrierelemente 6 derart erfolgen, dass diese in einer zueinander diametralen Lage angeordnet sein können oder angeordnet werden können. Durch die diametrale zueinander Anordnung der beiden Zentrierelemente 6 sind diese bezüglich einer der Längsachsen 13 bis 15 einander gegenüberliegend angeordnet.

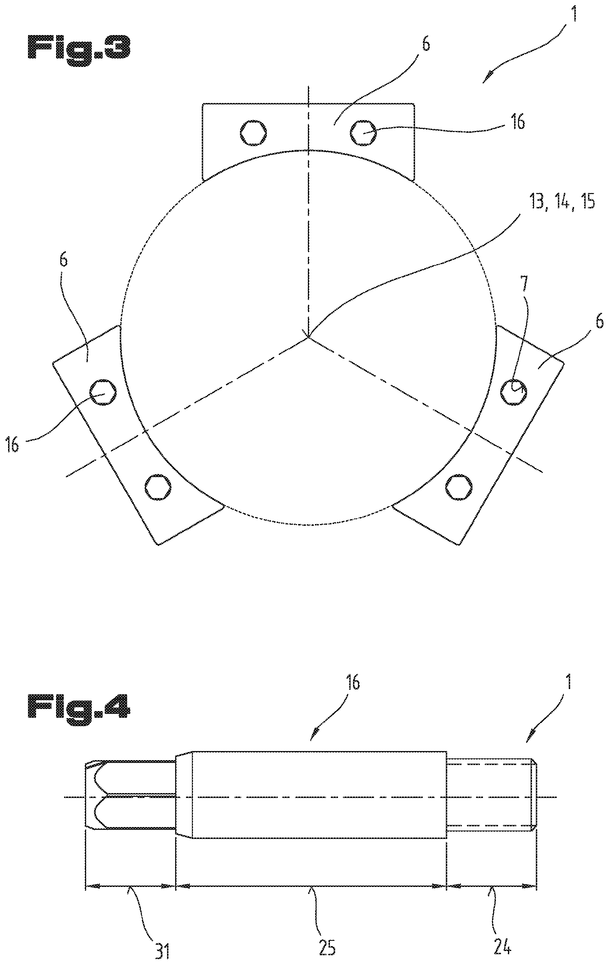

In der Fig. 3 ist nunmehr gezeigt, dass es auch möglich ist, die Zentriervorrichtung 1 mit mehr als zwei Zentrierelementen 6 auszubilden. Dabei sei erwähnt, dass in der Fig. 3 nur jene Ausbildung des Zentrierelements 6 gezeigt wird, wie dieses in der Fig. 1 gezeigt und beschrieben worden ist, jedoch auch die Mehrfachanordnung von mehr als zwei Zentrierelementen 6 auch mit einer Ausbildung, wie diese in der Fig. 2 gezeigt und beschrieben worden ist, erfolgen kann.

In dem hier vorliegenden Ausführungsbeispiel ist eine Anzahl von drei Stück Zentrierelementen 6 dargestellt, welche bevorzugt gleichmäßig über den Umfang verteilt angeordnet sind bzw. angeordnet werden können. Durch die gleichmäßige, umfängliche Verteilung von drei Zentrierelementen 6 sind diese um ein Ausmaß in einem Winkel von 120° zueinander angeordnet. Diese umfängliche Verteilung kann gleichmäßig über den Umfang verteilt erfolgen, jedoch ist diese nicht zwingend erforderlich und es können auch die Zentrierelemente 6 zwischen sich einen zueinander unterschiedlichen Winkel bzw. ein Winkelausmaß einschließen. Es könnte aber auch eine Anzahl von Zentrierelementen 6 gewählt werden, welche größer ist als drei Stück. So könnten beispielsweise in Abhängigkeit von der Dimension und damit der Außenabmessung vier, fünf, sechs, sieben oder acht und auch mehr Zentrierelemente 6 vorgesehen werden. Dabei ist wiederum jedem der Zentrierelemente 6 zumindest zwei der Zentrierbolzen 16 für dessen Zentrierung zuzuordnen bzw. damit zu versehen.

In der Fig. 4 ist eine mögliche Ausbildung eines Zentrierbolzens 16 der Zentriervorrichtung 1 gezeigt. Der Zentrierbolzen weist in Axialrichtung gesehen einen ersten Teilabschnitt 24 und einen daran anschließend zweiten Teilabschnitt 25 auf. Um eine Verbindung mit der Armatur 2, insbesondere deren Aufnahmeöffnung 8 oder einem Flanschring 11 oder 12 herstellen zu können, kann der erste Teilabschnitt 24 des Zentrierbolzens 16 mit einem Außengewinde versehen sein. Damit kann z.B. der Zentrierbolzens 16 einfach mit der Armatur 2 verbunden werden. Der zweite daran anschließende Teilabschnitt 25 ist bevorzugt glatt und zylinderförmig ausgebildet. Weiters ist es noch möglich, dass der Zentrierbolzen der Zentriervorrichtung 1 an dessen vom ersten Teilabschnitt 24 abgewendeten Seite mit einem mehrkantigen, insbesondere vierkantigen oder einem sechskantigen Querschnitt ausgebildet ist. Dieser Teil des Zentrierbolzens 16 kann einen dritten Teilabschnitt 31 bilden. In Summe können die drei Teilabschnitte 24 25 und 31 die gesamte axiale Längserstreckung definieren. Damit kann das Anbringen der später noch beschriebenen Verbindungselemente 23 mit der Armatur 2 oder den Flanschringen 11, 12 gegebenenfalls unter Zuhilfenahme eines dazu entsprechend ausgebildeten Werkzeuges erleichtert werden.

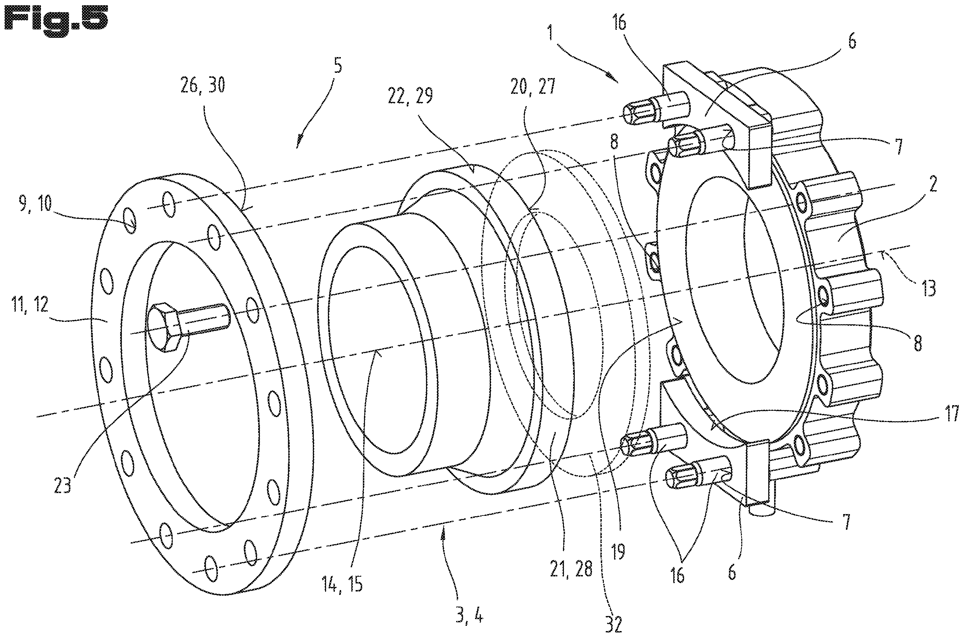

In der Fig. 5 ist nun ein Ausführungsbeispiel gezeigt, bei welchem die Armatur 2 mit einem Rohrstück 3 oder 4 mittels der Flanschverbindung 5 zu einer Einheit zusammengebaut werden soll, wobei die gegenseitige Ausrichtung und Zentrierung mittels der zuvor beschriebenen Zentriervorrichtung 1 erfolgen soll. Nachfolgend wird überwiegend nur auf das Rohrstück 3 Bezug genommen, wobei es aber auch möglich wäre, das zweite Rohrstück 4 anstatt des ersten Rohrstücks 3 zu verwenden.

Die Armatur 2, insbesondere eine Absperrklappe, ein Drosselventil, ein Schmetterlingsventil oder dergleichen wird für den Zusammenbau bereitgestellt und weist über den äußeren Umfang verteilt die zuvor beschriebenen und angedeuteten Aufnahmeöffnungen 8 auf. Im Bereich der zu bildenden Flanschverbindung 5 weist die Armatur 2 weiters noch eine bevorzugt eben ausgebildete Dichtfläche 19 auf. Dabei ist die Dichtfläche 19 bevorzugt in senkrechter Richtung bezüglich der Längsachse 13 der Armatur 2 ausgerichtet und definiert damit eine in senkrechter Ausrichtung bezüglich der Längsachse 13 ausgerichtete Ebene.

Weiters ist bei dem hier gezeigten Ausführungsbeispiel ein Rohrstück 3 oder 4 bereitzustellen. Dabei sei erwähnt, dass das Rohrstück 3 oder 4 mit den unterschiedlichsten Axialerstreckungen ausgebildet sein kann. Das Rohrstück 3 weist weiters eine der Dichtfläche 19 zuwendbare Stirnfläche 20 sowie einen das Rohrstück 3 radial nach außen überragenden Bund 21 auf. Der Bund 21 weist weiters an seinem äußeren Umfang eine äußere Bundfläche 22 auf bzw. ist mit einer derartigen Bundfläche 22 ausgebildet. Die Stirnfläche 20 ist bezüglich der Längsachse 14 oder 15 des Rohrstücks 3 oder 4 in senkrechter Richtung dazu ausgerichtet. Die äußere Bundfläche 22 ist bevorzugt als Zylinderfläche ausgebildet, wobei der Bund 21 bevorzugt vollständig umlaufend über den Umfang des Rohrstücks 3, 4 angeordnet bzw. ausgebildet ist. Bevorzugt ist der Bund 21 einstückig mit dem Rohrstück 3, 4 ausgebildet. Es wäre aber auch noch möglich, den Bund 21 als eigenen Bauteil auszubilden und mit dem Basisrohr des Rohrstücks 3, 4 zu verbinden oder daran auszubilden.

Weiters ist für die Ausbildung der Flanschverbindung 5 noch ein loser Flanschring 11 oder 12 vorzusehen, welcher mit mehreren über den Umfang verteilt angeordneten Durchgangsöffnungen 9, 10 versehen ist.

Zum Zusammenbau der Armaturen 2 mit dem Rohrstück 3 oder 4 und dem losen Flanschring 11 oder 12 wird weiters eine der zuvor beschriebenen Ausbildungen der Zentriervorrichtung 1 verwendet bzw. eingesetzt. Wie bereits zuvor beschrieben, sind zumindest zwei Zentrierelemente 6 und zumindest vier Zentrierbolzen 16 zur Bildung der Zentriervorrichtung 1 vorzusehen. Die in den Zentrierelementen 6 angeordneten bzw. ausgebildeten zumindest zwei Zentrieröffnungen 7 sind derart angeordnet bzw. zueinander ausgerichtet, dass diese jeweils in einem gleichen Normalabstand von zwei in Umfangsrichtung hintereinander angeordneten Aufnahmeöffnungen 8 der Armatur 2 sowie von zwei in Umfangsrichtung hintereinander angeordneten Durchgangsöffnungen 9 oder 10 des losen Flanschrings 11 oder 12 angeordnet sind.

Weiters sind noch in Abhängigkeit von der Anzahl der Aufnahmeöffnungen 8 in der Armatur 2 sowie bevorzugt der gleichen Anzahl an Durchgangsöffnungen 9 oder 10 des Flanschrings 11 oder 12 eine entsprechende Stückzahl bzw. Anzahl von Verbindungselementen 23 bereit zu stellen bzw. vorzusehen. Die Verbindungselemente 23 dienen zur Verbindung des losen Flanschrings 11 oder 12 mit der Armatur 2.

Sind die zuvor beschriebenen Bauteile bereitgestellt worden, erfolgt ein voneinander umfänglich distanziertes Anordnen der zumindest zwei Zentrierelemente 6 an der Armatur 2 in einer koaxialen Lage von deren Zentrieröffnungen 7 bezüglich der oder den Aufnahmeöffnungen 8 in der Armatur 2. Ist diese Ausrichtung erfolgt, können die Zentrierbolzen 16 in die Zentrieröffnungen 7 der Zentrierelemente 6 sowie in die Aufnahmeöffnung 8 der Armatur 2 eingesetzt werden.

Unabhängig davon wäre es aber auch möglich, zuerst die Zentrierbolzen 16 in die entsprechenden Aufnahmeöffnungen 8 in der Armatur 2 einzusetzen und anschließend jedes der Zentrierelemente 6 mit dessen Zentrieröffnungen 7 in eine die Zentrierbolzen 16 aufnehmende Stellung zu verbringen.

Sind die zumindest zwei Zentrierelemente 6 sowie die dazu erforderlichen Zentrierbolzen 16 angeordnet, bilden diese die Zentriervorrichtung 1. Anschließend erfolgt das Verbringen des Rohrstücks 3 oder 4 zwischen die zumindest zwei Zentrierelemente 6. Bei diesem Vorgang erfolgt das Ausrichten der äußeren Bundfläche 22 des Bundes 21 an den jeweiligen dafür vorgesehenen Ausrichtflächen 17 der Zentrierelemente 6. Ist nun das Rohrstück 3 oder 4 bezüglich der Armatur 2 ausgerichtet, kann der lose Flanschring 11 oder 12 über das Rohrstück 3 oder 4 aufgesetzt bzw. verbracht werden. Weiters erfolgt dabei auch noch das Ausrichten des losen Flanschrings 11 oder 12 an den Zentrierbolzen 16, indem die Zentrierbolzen 16 von den jeweiligen Durchgangsöffnungen 9 oder 10 des losen Flanschrings 11 oder 12 aufgenommen werden. Durch das Ausrichten des losen Flanschrings 11 oder 12 mit seinen Durchgangsöffnungen 9 oder 12 bezüglich der Aufnahmeöffnungen 8 in der Armatur 2 kann anschließend das Einsetzen von mehreren der Verbindungselemente 23 in noch freie der Durchgangsöffnungen 9 oder 10 des losen Flanschrings 11 oder 12 erfolgen. Dann durchragen die Verbindungselemente 23 den losen Flanschring 11 oder 12 und werden weiters noch in die dazu korrespondierenden Aufnahmeöffnungen 8 der Armatur 2 eingesetzt.

Um eine gegenseitige Verbindung bzw. Halterung des Rohrstücks 3 oder 4 an der Armatur 2 zu erzielen, sind zumindest einzelne der Verbindungselemente 23 festzuziehen, sodass der lose Flanschring 11 oder 12 am Bund 21 oder 28 anliegt und damit das Rohrstück 3 oder 4 in bekannter Weise an die Armatur 2 angedrückt ist bzw. wird. Ist eine ausreichende Lagefixierung und Positionierung des Rohrstücks 3 oder 4 bezüglich der Armatur 2 erfolgt, kann die Zentriervorrichtung 1 entfernt werden.

Zur Vervollständigung der Flanschverbindung 5 erfolgt das Einsetzen von weiteren der Verbindungselemente 23 in die restlichen, noch freien Durchgangsöffnungen 9 oder 10 des losen Flanschrings 11 oder 12 sowie in die dazu korrespondierenden Aufnahmeöffnungen 8 in der Armatur 2. Schließlich erfolgt noch das Festziehen dieser weiteren Verbindungselemente 23. Die Anzahl der weiteren Verbindungselemente 23 hängt von der Anzahl der gewählten Zentrierbolzen 16 ab.

Bevorzugt wird durch die Zentriervorrichtung 1 die Längsachse 14 oder 15 des Rohrstücks 3 oder 4 in koaxialer Ausrichtung bezüglich der Längsachse 13 der Armatur 2 ausgerichtet. Weiters ist es noch möglich, dass zwischen der Dichtfläche 19 der Armatur 2 und der dieser zugewendeten Stirnfläche 20 des Rohrstücks 3 oder 4 zumindest ein Dichtelement 32 eingesetzt wird. Im vorliegenden Ausführungsbeispiel ist das mindestens eine Dichtelement 32 als Flachdichtung ausgebildet und in strichlierten Linien angedeutet. Wenn die äußere Abmessung, insbesondere der äußere Durchmesser, des später noch beschriebenen ersten Bundes 21 mit seiner ersten Bundfläche 22 oder des zweiten Bunds 28 mit seiner zweiten Bundfläche 29 der äußeren Abmessung, insbesondere dem äußeren Durchmesser, des Dichtelements 32 entspricht, kann das Dichtelement 32 ebenfalls im Zuge des Zusammenbaus mittels der Zentriervorrichtung 1 ausgerichtet und positioniert werden.

Als Dichtelement 32 könnte aber auch oder zusätzlich zur Flachdichtung einer oder mehrere O-Ringe Verwendung finden.

Je nach Ausbildung und Art der Aufnahmeöffnungen 8 in der Armatur 2 sind dazu auch die Verbindungselemente 23 entsprechend zu wählen. Bevorzugt werden als Verbindungselement 23 Schrauben verwendet, wobei hier die unterschiedlichsten und aus dem Stand der Technik bekannten Ausbildungen verwendet werden können. So wäre es möglich, die in der Armatur 2 angeordneten Aufnahmeöffnungen 8 als Gewindebohrungen auszubilden. In diesem Fall können die Verbindungselemente 23 ausschließlich aus Schrauben oder aus Gewindestiften mit Muttern gebildet sein. Werden hingegen die Aufnahmeöffnungen 8 als Durchbrüche oder ebenfalls als Durchgangsöffnungen ausgebildet, sind als Verbindungselemente 23 Schrauben mit Muttern sowie gegebenenfalls Scheiben vorzusehen.

Das zuvor beschriebene Entfernen der Zentriervorrichtung 1, insbesondere deren Zentrierelemente 6, bei bereits festgezogenen Verbindungselementen 23 und dem damit verbundenen Rohrstück 3 oder 4 mit der Armatur 2 ist es vorteilhaft, wenn bei einer auf dem Bund 21 oder 28 des Rohrstücks 3 oder 4 in Axialrichtung aufliegenden Stellung des losen Flanschrings 11 oder 12 zwischen zumindest einer den Zentrierelementen 6 zugewendeten Flanschfläche 26 oder 30 des losen Flanschrings 11 oder 12 und den Zentrierelementen 6 ein Axialspalt ausgebildet wird. Damit kann ein Verklemmen der Zentrierelemente 6 zwischen der Armatur 2 und dem festgezogenen Flanschring 11 oder 12 verhindert werden.

Das Entfernen bzw. Wegnehmen der Zentriervorrichtung 1 kann derart erfolgen, dass zuerst die Zentrierbolzen 16 von der Armatur 2 und dem Flanschring 11 oder 12 entfernt werden und anschließend die Zentrierelemente 6 in radialer Richtung aus dem zwischen dem Flanschring 11 oder 12 und der Armatur 2 gebildeten Spalt entnommen werden können.

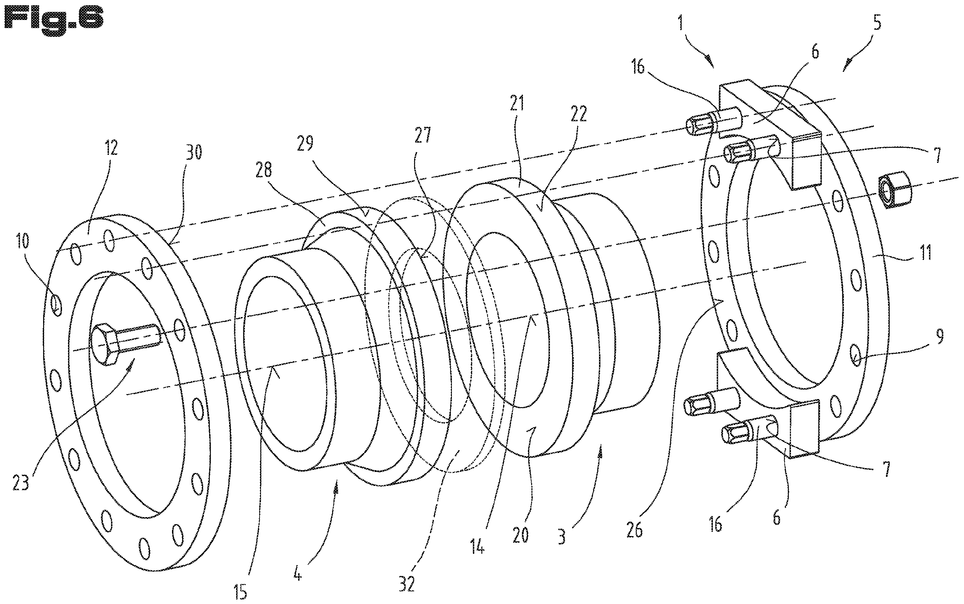

In der Fig. 6 ist nunmehr gezeigt, dass es auch möglich ist, die Zentriervorrichtung 1 für den Zusammenbau von zwei Rohrstücken 3, 4 mit der Flanschverbindung 5 einsetzen zu können. Anstatt der zuvor beschriebenen Armatur 2 wird hier das erste Rohrstück 3 mit dem zweiten Rohrstück 4 mittels der beiden Flanschringe, nämlich dem ersten Flanschring 11 und dem zweiten Flanschring 12 unter Ausbildung der Flanschverbindung 5 miteinander verbunden.

Da hier die Flanschverbindung 5 zwischen zwei Rohrstücken 3 und 4 gebildet wird, werden diese als hier als erstes Rohrstück 3 und zweites Rohrstück 4 bezeichnet. Gleiches gilt auch für die Flanschringe 11 und 12 sowie weiterer, ebenfalls mehrfach benötigter gleichartiger Bauteile. Das Verfahren zum Zusammenbau von zwei derartigen Rohrstücken 3, 4 kann dabei zumindest folgende Schritte umfassen bzw. wie nachfolgend beschrieben, durchgeführt werden.

Es erfolgt ein Bereitstellen des ersten Rohrstücks 3 mit seiner ersten Stirnfläche 20 und mit dem daran angeordneten und ausgebildeten ersten Bund 21. Der erste Bund 21 ist an seinem äußeren Umfang mit der ersten äußeren Bundfläche 22 ausgebildet. Weiters ist die erste Stirnfläche 20 bezüglich der ersten Längsachse 14 des ersten Rohrstücks 3 in senkrechter Richtung dazu ausgerichtet.

Grundsätzlich kann das zweite Rohrstück 4 analog ausgebildet sein, wie das zuvor beschriebene erste Rohrstück 3. So kann das zweite Rohrstück 4 eine zweite Stirnfläche 27 sowie einen zweiten Bund 28 aufweisen. Der zweite Bund 28 des zweiten Rohrstücks 4 ist an seinem äußeren Umfang mit einer zweiten äußeren Bundfläche 29 versehen bzw. ausgebildet. Die zweite Stirnfläche 27 des zweiten Rohrstücks 4 ist dabei ebenfalls in senkrechter Richtung bezüglich der zweiten Längsachse 15 des zweiten Rohrstücks 4 dazu ausgerichtet. Des Weiteren ist noch das Bereitstellen des ersten losen Flanschrings 11 mit seinen ersten Durchgangsöffnungen 9 sowie das Bereichern eines zweiten losen Flanschrings 12 mit seinen ebenfalls mehreren über den Umfang verteilt angeordneten zweiten Durchgangsöffnungen 10 durchzuführen.

Die Zentriervorrichtung 1 ist ebenfalls wiederum bereitzustellen und umfasst die zumindest zwei Zentrierelemente 6 sowie die zumindest vier Zentrierbolzen 16. Die Anordnung und Ausrichtung der Zentrieröffnungen 7 ist analog zu wählen, wie dies bereits zuvor detailliert beschrieben worden ist und in Abhängigkeit von den ersten und zweiten Durchgangsöffnungen 9, 10 der beiden Flanschringe 11, 12 zu wählen.

Zur Verbindung des ersten losen Flanschrings 11 mit dem zweiten losen Flanschring 12 sind wiederum mehrere der Verbindungselemente 23 bereitzustellen. Da zumeist in den beiden Flanschringen 11, 12 jeweils glatt ausgebildete Durchgangsöffnungen 9, 10 angeordnet sind, werden als Verbindungselemente 23 von Schrauben und Muttern sowie gegebenenfalls Scheiben und/oder Sicherungsringen gebildet.

Ist die gesamte Bereitstellung erfolgt, werden die zumindest zwei Zentrierelemente 6 umfänglich voneinander distanziert am ersten losen Flanschring 11 angeordnet. Dabei werden die Zentrieröffnungen 7 der Zentrierelemente 6 jeweils in koaxialer Lage bezüglich von ersten der Durchgangsöffnungen 9 des ersten losen Flanschrings 11 angeordnet bzw. ausgerichtet. Nachfolgend kann das Einsetzen der Zentrierbolzen 16 in die Zentrieröffnungen 7 der Zentrierelemente 6 sowie in die ersten Durchgangsöffnungen 9 des ersten losen Flanschrings 11 erfolgen. Die einzelnen Zentrierbolzen 16 können anschließend am ersten losen Flanschring 11 fixiert werden. Wie bereits zuvor beschrieben, könnte aber auch zuerst das Anordnen und Fixieren der Zentrierbolzen 16 am ersten losen Flanschring 11 erfolgen und anschließend das Anbringen der Zentrierelemente 6 zur Bildung der Zentriervorrichtung 1 erfolgen.

Anschließend kann das Verbringen des ersten Rohrstücks 3 zwischen die zumindest zwei Zentrierelemente 6 der Zentriervorrichtung 1 erfolgen, wobei dann das Ausrichten der äußeren ersten Bundfläche 22 des ersten Bundes 21 an den Ausrichtflächen 17 der Zentrierelemente 6 erfolgt. Dann wird das zweite Rohrstück 4 ebenfalls zwischen die zumindest zwei Zentrierelemente 6 verbracht. Dabei erfolgt ebenfalls ein Ausrichten der äußeren zweiten Bundfläche 29 des zweiten Bundes 28 an den Ausrichtflächen 17 der Zentrierelemente 6. Dabei weisen bevorzugt die beiden Bundflächen 22 und 29 des ersten Bundes 21 und des zweiten Bundes 28 die gleiche Außenabmessung, insbesondere den gleichen Außendurchmesser auf. Damit auch beide Bundflächen 22 und 29 an den Ausrichtflächen 17 angelegt und abgestützt werden können, sollen die Zentrierelemente 6 eine Dicke bzw. eine Axialerstreckung aufweisen, welche größer ist als eine Dicke bzw. Stärke eines der beiden Bunde 21, 28 in Axialrichtung.

Sind die beiden Rohrstücke 3, 4 zueinander ausgerichtet, ist der zweite lose Flanschring 12 über das zweite Rohrstück 4 aufzusetzen und an den Zentrierbolzen 16 auszurichten. Dies erfolgt dadurch, dass die Zentrierbolzen 16 von den jeweiligen zweiten Durchgangsöffnungen 10 des zweiten Flanschrings 12 aufgenommen bzw. durchsetzt werden. Die beiden Flanschringe 11, 12 werden jeweils an voneinander abgewendeten Seiten des jeweiligen Bundes 21, 28 der beiden Rohrstücke 3, 4 angeordnet.

Ist die gegenseitige Ausrichtung erfolgt, werden mehrere der Verbindungselemente 23 in noch freie der ersten Durchgangsöffnungen 9 des ersten losen Flanschrings 11 sowie in die dazu korrespondierenden ebenfalls noch freien zweiten Durchgangsöffnungen 10 des zweiten Flanschrings 12 eingesetzt und zur Bildung der Flanschverbindung 5 festgezogen. Anschließend erfolgt das Entfernen der Zentriervorrichtung 1 sowie das Einsetzen von weiteren der Verbindungselemente 23 in die restlichen noch freien Durchgangsöffnungen 9, 10 der beiden Flanschringe 11, 12. Schließlich werden auch noch die weiteren Verbindungselemente 23 festgezogen.

Sind die beiden Rohrstücke 3, 4 in eine zueinander ausgerichtete, bevorzugt zentrierte Position verbracht und befinden sich diese zwischen den zumindest zwei Zentrierelementen 6, können diese in eine an deren Stirnflächen 20, 27 aneinander anliegende Stellung verbracht sein. Weiters kann damit aber auch die erste Längsachse 14 des ersten Rohrstücks 3 in koaxialer Ausrichtung bezüglich der zweiten Längsachse 15 des zweiten Rohrstücks 4 ausgerichtet sein bzw. werden.

Auch hier wäre es wiederum möglich, zwischen den beiden Rohrstücken 3, 4, insbesondere zwischen der ersten Stirnfläche 20 und der dieser zugewendeten zweiten Stirnfläche 27, zumindest ein Dichtelement 32 einzusetzen bzw. vorzusehen, wie dies zuvor bereits beschrieben worden ist. Als Dichtelement 32 ist hier ebenfalls eine Flachdichtung gewählt worden, welche in strichlierten Linien angedeutet ist. Als Dichtelement 32 könnte aber auch oder zusätzlich zur Flachdichtung einer oder mehrere O-Ringe Verwendung finden.

Weiters kann es auch hier vorteilhaft sein, wenn bei festgezogener Flanschverbindung 5 und somit bei einer auf dem ersten Bund 21 des ersten Rohrstücks 3 aufliegenden Stellung des ersten, losen Flanschrings 11 und bei einer auf dem zweiten Bund 28 des zweiten Rohrstücks 4 aufliegenden Stellung des zweiten losen Flanschrings 12 zwischen den Zentrierelementen 6 und zumindest einer den Zentrierelementen 6 zugewendeten ersten Flanschfläche 26 des ersten losen Flanschrings 11 und einer zweiten Flanschfläche 30 des zweiten losen Flanschrings 12 ebenfalls ein Axialspalt ausgebildet wird. Um dies zu erzielen, ist die axiale Dicke bzw. Stärke der Zentrierelemente 6 kleiner zu wählen als die Dicke bzw. Stärke der beiden Bunde 21 und 28 in der gleichen Axialrichtung.

Abschließend sei erwähnt, dass bei der Wahl der Abmessungen und der Toleranzen der Zentriervorrichtung 1, insbesondere deren Zentrieröffnungen 7 und dem jeweiligen in diese einzusetzenden Zentrierbolzen 16 eine solche Passungswahl getroffen wird, bei welcher ein einwandfreier Fügevorgang ermöglicht sowie für den jeweiligen Anwendungsfall eine ausreichend genaue Positionierung bzw. Ausrichtung erzielt wird.

Die Ausführungsbeispiele zeigen und beschreiben mögliche Ausführungsvarianten der Zentriervorrichtung 1 sowie verschiedene Verfahren des Zusammenbaus einer Armatur 2 mit einem Rohrstück 3, 4, oder eines ersten Rohrstücks 3 mit einem zweiten Rohrstück 4.

Der Ordnung halber sei abschließend darauf hingewiesen, dass zum besseren Verständnis des Aufbaus der Zentriervorrichtung 1 Elemente derselben oder die mittels der Zentriervorrichtung 1 für den Zusammenbau auszurichtenden Bauteile teilweise unmaßstäblich und/oder vergrößert und/oder verkleinert dargestellt wurden.

### Bezugszeichenaufstellung

| | | | |
|---|---|---|---|
| 1 | Zentriervorrichtung | 31 | dritter Teilabschnitt |
| 2 | Armatur | 32 | Dichtelement |
| 3 | erstes Rohrstück | | |
| 4 | zweites Rohrstück | | |
| 5 | Flanschverbindung | | |
| 6 | Zentrierelement | | |
| 7 | Zentrieröffnung | | |
| 8 | Aufnahmeöffnung | | |
| 9 | erste Durchgangsöffnung | | |
| 10 | zweite Durchgangsöffnung | | |
| 11 | erster Flanschring | | |
| 12 | zweiter Flanschring | | |
| 13 | Längsachse (der Armatur) | | |
| 14 | Längsachse (erstes Rohrst.) | | |
| 15 | Längsachse (zweites Rohrst.) | | |
| 16 | Zentrierbolzen | | |
| 17 | Ausrichtfläche | | |
| 18 | Ausrichtteilfläche | | |
| 19 | Dichtfläche | | |
| 20 | erste Stirnfläche | | |
| 21 | erster Bund | | |
| 22 | erste Bundfläche | | |
| 23 | Verbindungselement | | |
| 24 | erster Teilabschnitt | | |
| 25 | zweiter Teilabschnitt | | |
| 26 | erste Flanschfläche | | |
| 27 | zweite Stirnfläche | | |
| 28 | zweiter Bund | | |
| 29 | zweite Bundfläche | | |
| 30 | zweite Flanschfläche | | |

## Patentansprüche

1. Verfahren zum Zusammenbau einer Armatur (2), insbesondere einer Absperrklappe, eines Drosselventils oder eines Schmetterlingsventils, mit einem Rohrstück (3, 4) und mit einer Flanschverbindung (5), bei welchem folgende Schritte durchgeführt werden:
- Bereitstellen der Armatur (2) mit einer ebenen Dichtfläche (19) und mehreren über den äußeren Umfang verteil angeordneten Aufnahmeöffnungen (8), wobei die Dichtfläche (19) in senkrechter Richtung bezüglich einer Längsachse (13) der Armatur (2) ausgerichtet ist;
- Bereitstellen eines Rohrstücks (3, 4) mit einer der Dichtfläche (19) der Armatur (2) zuwendbaren Stirnfläche (20, 27) und mit einem Bund (21, 28), wobei der Bund (21, 28) an seinem äußeren Umfang mit einer äußeren Bundfläche (22, 29) ausgebildet ist und die Stirnfläche (20, 27) bezüglich einer Längsachse (14, 15) des Rohrstücks (3, 4) in senkrechter Richtung dazu ausgerichtet ist;
- Bereitstellen eines losen Flanschrings (11, 12) mit mehreren über den Umfang verteilt angeordneten Durchgangsöffnungen (9, 10);
- Bereitstellen einer Zentriervorrichtung (1), umfassend zumindest zwei Zentrierelemente (6) und zumindest vier Zentrierbolzen (16), wobei in den Zentrierelementen (6) jeweils zumindest zwei Zentrieröffnungen (7) ausgebildet sind und die Zentrieröffnungen (7) jeweils in einem gleichen Normalabstand von zwei in Umfangsrichtung hintereinander angeordneten Aufnahmeöffnungen (8) der Armatur (2) sowie von zwei in Umfangsrichtung hintereinander angeordneten Durchgangsöffnungen (9, 10) des losen Flanschrings (11, 12) angeordnet sind und jedes der Zentrierelemente (6) mit einer der äußeren Bundfläche (22, 29) des Bundes (21, 28) zuwendbaren Ausrichtfläche (17) ausgebildet ist;
- Bereitstellen von mehreren Verbindungselementen (23), welche Verbindungselemente (23) zur Verbindung des losen Flanschrings (11, 12) mit der Armatur (2) dienen;
- voneinander umfänglich distanziertes Anordnen der zumindest zwei Zentrierelemente (6) an der Armatur (2) in einer koaxialen Lage von deren Zentrieröffnungen (7) bezüglich den Aufnahmeöffnungen (8) in der Armatur (2);
- Einsetzen der Zentrierbolzen (16) in die Zentrieröffnungen (7) der Zentrierelemente (6) sowie in die Aufnahmeöffnungen (8) der Armatur (2);
- Verbringen des Rohrstücks (3, 4) zwischen die zumindest zwei Zentrierelemente (6) und dabei Ausrichten der äußeren Bundfläche (22, 29) des Bundes (21, 28) an den Ausrichtflächen (17) der Zentrierelemente (6);
- Aufsetzen des losen Flanschrings (11, 12) über das Rohrstück (3, 4) und Ausrichten des losen Flanschrings (11, 12) an den Zentrierbolzen (16), indem die Zentrierbolzen (16) von den jeweiligen Durchgangsöffnungen (9, 10) des losen Flanschrings (11, 12) aufgenommen werden;
- Einsetzen von mehreren der Verbindungselemente (23) in noch freie Durchgangsöffnungen (9, 10) des losen Flanschrings (11, 12) sowie in die dazu korrespondierenden Aufnahmeöffnungen (8) der Armatur (2) und Festziehen der Verbindungselemente (23);
- Entfernen der Zentriervorrichtung (1);
- Einsetzen von weiteren Verbindungselementen (23) in die restlichen, noch freien Durchgangsöffnungen (9, 10) des losen Flanschrings (11, 12) sowie die dazu korrespondierenden Aufnahmeöffnungen (8) der Armatur (2) und Festziehen der weiteren Verbindungselemente (23).

2. Verfahren nach Anspruch 1, **dadurch gekennzeichnet, dass** die Längsachse (14, 15) des Rohrstücks (3, 4) in koaxialer Ausrichtung bezüglich der Längsachse (13) der Armatur (2) ausgerichtet wird.

3. Verfahren nach Anspruch 1 oder 2, **dadurch gekennzeichnet, dass** zwischen der Dichtfläche (19) der Armatur (2) und der dieser zugewendeten Stirnfläche (20, 27) des Rohrstücks (3, 4) zumindest ein Dichtelement (32) eingesetzt wird.

4. Verfahren nach einem der vorhergehenden Ansprüche, **dadurch gekennzeichnet, dass** die in der Armatur (2) angeordneten Aufnahmeöffnungen (8) von Gewindebohrungen gebildet sind.

5. Verfahren nach einem der vorhergehenden Ansprüche, **dadurch gekennzeichnet, dass** die Zentrierbolzen (16) der Zentriervorrichtung (1) jeweils mit einem ersten Teilabschnitt (24) und einem daran in Axialrichtung anschließenden zweiten Teilabschnitt (25) ausgebildet sind, wobei der erste Teilabschnitt (24) mit einem Außengewinde versehen ist und der zweite Teilabschnitt (25) glatt und zylinderförmig ausgebildet ist.

6. Verfahren nach einem der vorhergehenden Ansprüche, **dadurch gekennzeichnet, dass** die Zentrierbolzen (16) der Zentriervorrichtung (1) jeweils an deren vom ersten Teilabschnitt (24) abgewendeten Seite mit einem vierkantigen oder einem sechskantigen Querschnitt ausgebildet sind.

7. Verfahren nach einem der vorhergehenden Ansprüche, **dadurch gekennzeichnet, dass** bei einer auf dem Bund (21) des Rohrstücks (3, 4) in Axialrichtung aufliegenden Stellung des losen Flanschrings (11, 12) zwischen zumindest einer den Zentrierelementen (6) zugewendeten Flanschfläche (26, 30) und den Zentrierelementen (6) ein Axialspalt ausgebildet wird.

8. Verfahren zum Zusammenbau von zwei Rohrstücken (3, 4) und einer Flanschverbindung (5), bei welchem folgende Schritte durchgeführt werden:
- Bereitstellen eines ersten Rohrstücks (3) mit einer ersten Stirnfläche (20) und mit einem ersten Bund (21), wobei der erste Bund (21) an seinem äußeren Umfang mit einer ersten äußeren Bundfläche (22) ausgebildet ist und die erste Stirnfläche (20) bezüglich einer ersten Längsachse (14) des ersten Rohrstücks (3) in senkrechter Richtung dazu ausgerichtet ist;
- Bereitstellen eines zweiten Rohrstücks (4) mit einer zweiten Stirnfläche (27) und mit einem zweiten Bund (28), wobei der zweite Bund (28) an seinem äußeren Umfang mit einer zweiten äußeren Bundfläche (29) ausgebildet ist und die zweite Stirnfläche (27) bezüglich einer zweiten Längsachse (15) des zweiten Rohrstücks (4) in senkrechter Richtung dazu ausgerichtet ist;
- Bereitstellen eines ersten losen Flanschrings (11) mit mehreren über den Umfang verteilt angeordneten ersten Durchgangsöffnungen (9);
- Bereitstellen eines zweiten losen Flanschrings (12) mit mehreren über den Umfang verteilt angeordneten zweiten Durchgangsöffnungen (10);
- Bereitstellen einer Zentriervorrichtung (1), umfassend zumindest zwei Zentrierelemente (6) und zumindest vier Zentrierbolzen (16), wobei in den Zentrierelementen (6) jeweils zumindest zwei Zentrieröffnungen (7) ausgebildet sind und die Zentrieröffnungen (7) jeweils in einem gleichen Normalabstand von zwei in Umfangsrichtung hintereinander angeordneten ersten und zweiten Durchgangsöffnungen (9, 10) der beiden Flanschringe (11, 12) angeordnet sind und jedes der Zentrierelemente (6) mit einer der ersten und der zweiten äußeren Bundfläche (22, 29) der ersten und zweiten Bunde (21, 28) zuwendbaren Ausrichtfläche (17) ausgebildet ist;
- Bereitstellen von mehreren Verbindungselementen (23), welche Verbindungselemente (23) zur Verbindung des ersten losen Flanschrings (11) mit dem zweiten losen Flanschring (12) dienen;
- voneinander umfänglich distanziertes Anordnen der zumindest zwei Zentrierelemente (6) am ersten losen Flanschring (11) in einer koaxialen Lage von deren Zentrieröffnungen (7) bezüglich der ersten Durchgangsöffnungen (9) des ersten losen Flanschrings (11);
- Einsetzen der Zentrierbolzen (16) in die Zentrieröffnungen (7) der Zentrierelemente (6) sowie in die ersten Durchgangsöffnungen (9) des ersten losen Flanschrings (11) und fixieren der zumindest zwei Zentrierelemente (6) sowie der Zentrierbolzen (16) am ersten losen Flanschring (11);
- Verbringen des ersten Rohrstücks (3) zwischen die zumindest zwei Zentrierelemente (6) und dabei Ausrichten der äußeren ersten Bundfläche (22) des ersten Bundes (21) an den Ausrichtflächen (17) der Zentrierelemente(6);
- Verbringen des zweiten Rohrstücks (4) zwischen die zumindest zwei Zentrierelemente (6) und dabei Ausrichten der äußeren zweiten Bundfläche (29) des zweiten Bundes (28) an den Ausrichtflächen (17) der Zentrierelemente (6);
- Aufsetzen des zweiten losen Flanschrings (12) über das zweite Rohrstück (4) und Ausrichten des zweiten losen Flanschrings (12) an den Zentrierbolzen (16), indem die Zentrierbolzen (16) von den jeweiligen zweiten Durchgangsöffnungen (10) des zweiten losen Flanschrings (12) aufgenommen werden;
- Einsetzen von mehreren der Verbindungselemente (23) in noch freie erste Durchgangsöffnungen (9) des ersten losen Flanschrings (11) sowie in die dazu korrespondierenden ebenfalls noch freien zweiten Durchgangsöffnungen (10) des zweiten losen Flanschrings (12) und Festziehen der Verbindungselemente (23);
- Entfernen der Zentriervorrichtung (1);
- Einsetzen von weiteren Verbindungselementen (23) in die restlichen, noch freien ersten Durchgangsöffnungen (9) des ersten Flanschrings (11) sowie in die dazu korrespondierenden ebenfalls noch freien zweiten Durchgangsöffnungen (10) des zweiten losen Flanschrings (12) und Festziehen der weiteren Verbindungselemente (23).

9. Verfahren nach Anspruch 8, **dadurch gekennzeichnet, dass** die beiden Rohrstücke (3, 4) beim Verbringen zwischen die zumindest zwei Zentrierelemente (6) in eine an deren Stirnflächen (20, 27) aneinander liegende Stellung verbracht werden.

10. Verfahren nach Anspruch 8 oder 9, **dadurch gekennzeichnet, dass** die erste Längsachse (14) des ersten Rohrstücks (3) in koaxialer Ausrichtung bezüglich der zweiten Längsachse (15) des zweiten Rohrstücks (4) ausgerichtet wird.

11. Verfahren nach einem der Ansprüche 8 bis 10, **dadurch gekennzeichnet, dass** zwischen der ersten Stirnfläche (20) des ersten Rohrstücks (3) und der dieser zugewendeten zweiten Stirnfläche (27) des zweiten Rohrstücks (4) zumindest ein Dichtelement (32) eingesetzt wird.

12. Verfahren nach einem der Ansprüche 8 bis 11, **dadurch gekennzeichnet, dass** bei einer auf dem ersten Bund (21) des ersten Rohrstücks (3) aufliegenden Stellung des ersten losen Flanschrings (11) und bei einer auf dem zweiten Bund (28) des zweiten Rohrstücks (4) aufliegenden Stellung des zweiten losen Flanschrings (12) zwischen den Zentrierelementen (6) und zumindest einer den Zentrierelementen (6) zugewendeten Flanschfläche (26, 30) ein Axialspalt ausgebildet wird.

13. Verfahren nach einem der vorhergehenden Ansprüche, **dadurch gekennzeichnet, dass** bei einer gewählten Anzahl von zwei Zentrierelementen (6) die Zentrierelemente (6) in einer zueinander diametralen Lage angeordnet werden.

14. Verfahren nach einem der Ansprüche 1 bis 12, **dadurch gekennzeichnet, dass** bei einer gewählten Anzahl von mehr als zwei Zentrierelementen (6) die Zentrierelemente (6) über den Umfang verteilt angeordnet werden, insbesondere gleichmäßig über den Umfang verteilt angeordnet werden.

15. Verfahren nach einem der vorhergehenden Ansprüche, **dadurch gekennzeichnet, dass** die Ausrichtfläche (17) des Zentrierelements (6) durch einen Teilabschnitt einer Hohlzylinderfläche gebildet ist.

## Claims

1. A method for assembling a fitting (2), in particular a shut-off valve, a throttle valve, or a butterfly valve, with a pipe piece (3, 4) and with a flange connection (5), in which the following method steps are carried out:
- providing the fitting (2) having a level sealing surface (19) and multiple accommodation openings (8) disposed distributed over the outer circumference, wherein the sealing surface (19) is aligned in the perpendicular direction with respect to a longitudinal axis (13) of the fitting (2);
- providing a pipe piece (3, 4) having an end face (20, 27), which can be turned towards the sealing surface (19) of the fitting (2), and having a collar (21, 28), wherein the collar (21, 28) is formed, on its outer circumference, with an outer collar surface (22, 29), and the end face (20, 27) is aligned, with respect to a longitudinal axis (14, 15) of the pipe piece (3, 4), in the perpendicular direction to said axis (14, 15);
- providing a loose flange ring (11, 12) having multiple passage openings (9, 10) disposed distributed over the circumference;
- providing a centering device (1) comprising at least two centering elements (6) and at least four centering bolts (16), wherein at least two centering openings (7) are formed in the centering elements (6), in each instance, and the centering openings (7) are disposed, in each instance, at the same normal line distance from two accommodation openings (8) of the fitting (2) that are disposed one behind the other in the circumferential direction, as well as from two passage openings (9, 10) of the loose flange ring (11, 12) that are disposed one behind the other in the circumferential direction, and each of the centering elements (6) is formed with an alignment surface (17) that can be turned towards the outer collar surface (22, 29) of the collar (21, 28);
- providing multiple connecting elements (23), which connecting elements (23) serve to connect the loose flange ring (11, 12) to the fitting (2);
- arranging the at least two centering elements (6) on the fitting (2) at a distance from one another on the circumference, in a coaxial position from their centering openings (7), with regard to the accommodation openings (8) in the fitting (2);
- inserting the centering bolts (16) into the centering openings (7) of the centering elements (6), as well as into the accommodation openings (8) of the fitting (2);
- putting the pipe piece (3, 4) between the at least two centering elements (6), and, in this process, aligning the outer collar surface (22, 29) of the collar (21, 28) with the alignment surfaces (17) of the centering elements (6);
- placing the loose flange ring (11, 12) over the pipe piece (3, 4) and aligning the loose flange ring (11, 12) with the centering bolts (16) by the centering bolts (16) being received by the respective passage openings (9, 10) of the loose flange ring (11, 12);
- inserting multiple connecting elements (23) into passage openings (9, 10) of the loose flange ring (11, 12) that are still free, as well as into the corresponding accommodation openings (8) of the fitting (2), and tightening the connecting elements (23);
- removing the centering device (1);
- inserting further connecting elements (23) into the remaining passage openings (9, 10) of the loose flange ring (11, 12) that are still free, as well as into the corresponding accommodation openings (8) of the fitting (2), and tightening the further connecting elements (23).

2. The method according to claim 1, **characterized in that** the longitudinal axis (14, 15) of the pipe piece (3, 4) is aligned in coaxial alignment with regard to the longitudinal axis (13) of the fitting (2).

3. The method according to claim 1 or 2, **characterized in that** at least one sealing element (32) is inserted between the sealing surface (19) of the fitting (2) and the end face (20, 27) of the pipe piece (3, 4) facing it.

4. The method according to one of the preceding claims, **characterized in that** the accommodation openings (8) disposed in the fitting (2) are formed by threaded bores.

5. The method according to one of the preceding claims, **characterized in that** the centering bolts (16) of the centering device (1) are formed, in each instance, with a first partial section (24) and a second partial section (25) adjoining the first in the axial direction, wherein the first partial section (24) is provided with an external thread and the second partial section (25) is formed to be smooth and cylindrical.

6. The method according to one of the preceding claims, **characterized in that** the centering bolts (16) of the centering device (1) are formed, in each instance, with a tetragonal or hexagonal cross-section on their side that faces away from the first partial section (24).

7. The method according to one of the preceding claims, **characterized in that** in the case of a position of the loose flange ring (11, 12) on the collar (21) of the pipe piece (3, 4), lying on it in the axial direction, an axial gap is formed between at least one flange surface (26, 30) that faces the centering elements (6) and the centering elements (6).

8. A method for assembling two pipe pieces (3, 4) and a flange connection (5), in which the following steps are carried out:
- providing a first pipe piece (3) having a first end face (20) and having a first collar (21), wherein the first collar (21) is formed, on its outer circumference, with a first outer collar surface (22), and the first end face (20) is aligned, with respect to a first longitudinal axis (14) of the first pipe piece (3), in the perpendicular direction to said axis (14);
- providing a second pipe piece (4) having a second end face (27) and having a second collar (28), wherein the second collar (28) is formed, on its outer circumference, with a second outer collar surface (29), and the second end face (27) is aligned, with respect to a second longitudinal axis (15) of the second pipe piece (4), in the perpendicular direction to said axis (15);
- providing a first loose flange ring (11) having multiple first passage openings (9) disposed distributed over the circumference;
- providing a second loose flange ring (12) having multiple second passage openings (10) disposed distributed over the circumference;
- providing a centering device (1) comprising at least two centering elements (6) and at least four centering bolts (16), wherein at least two centering openings (7) are formed in the centering elements (6), in each instance, and the centering openings (7) are disposed, in each instance, at the same normal line distance from two first and second passage openings (9, 10) of the two flange rings (11, 12), which openings are disposed one behind the other in the circumferential direction, and each of the centering elements (6) is formed with an alignment surface (17) that can be turned towards the first and the second outer collar surface (22, 29) of the first and second collars (21, 28);
- providing multiple connecting elements (23), which connecting elements (23) serve to connect the first loose flange ring (11) to the second loose flange ring (12);
- arranging the at least two centering elements (6) at a distance from one another on the circumference on the first loose flange ring (11), in a coaxial position from their centering openings (7), with regard to the first passage openings (9) of the first loose flange ring (11);
- inserting the centering bolts (16) into the centering openings (7) of the centering elements (6), as well as into the first passage openings (9) of the first loose flange ring (11), and fixing the at least two centering elements (6) and the centering bolts (16) in place on the first loose flange ring (11);
- putting the first pipe piece (3) between the at least two centering elements (6), and, in this process, aligning the outer first collar surface (22) of the first collar (21) with the alignment surfaces (17) of the centering elements (6);
- putting the second pipe piece (4) between the at least two centering elements (6), and, in this process, aligning the outer second collar surface (29) of the second collar (28) with the alignment surfaces (17) of the centering elements (6);
- placing the second loose flange ring (12) over the second pipe piece (4) and aligning the second loose flange ring (12) with the centering bolts (16) by the centering bolts (16) being received by the respective second passage openings (10) of the second loose flange ring (12);
- inserting multiple connecting elements (23) into first passage openings (9) of the first loose flange ring (11) that are still free, as well as into the corresponding second passage openings (10) of the second loose flange ring (12) that are still free, and tightening the connecting elements (23);
- removing the centering device (1);
- inserting further connecting elements (23) into the remaining first passage openings (9) of the first flange ring (11) that are still free, as well as into the second corresponding passage openings (10) of the second loose flange ring (12) that are still free, and tightening the further connecting elements (23).

9. The method according to claim 8, **characterized in that** the two pipe pieces (3, 4) are put into a position in which their end faces (20, 27) lie against one another when said pipe pieces (3, 4) are placed between the at least two centering elements (6).

10. The method according to claim 8 or 9, **characterized in that** the first longitudinal axis (14) of the first pipe piece (3) is aligned in coaxial alignment with respect to the second longitudinal axis (15) of the second pipe piece (4).

11. The method according to one of claims 8 to 10, **characterized in that** at least one sealing element (32) is inserted between the first end face (20) of the first pipe piece (3) and the second end face (27) of the second pipe piece (4), which faces the first.

12. The method according to one of claims 8 to 11, **characterized in that** in the case of a position of the first loose flange ring (11) lying on the first collar (21) of the first pipe piece (3), and in the case of a position of the second loose flange ring (12) lying on the second collar (28) of the second pipe piece (4), an axial gap is formed between the centering elements (6) and at least one flange surface (26, 30) facing the centering elements (6).

13. The method according to one of the preceding claims, **characterized in that** in the case of a selected number of two centering elements (6), the centering elements (6) are disposed in a position diametrical to one another.

14. The method according to one of claims 1 to 12, **characterized in that** in the case of a selected number of more than two centering elements (6), the centering elements (6) are disposed distributed over the circumference, in particular disposed distributed uniformly over the circumference.

15. The method according to one of the preceding claims, **characterized in that** the alignment surface (17) of the centering element (6) is formed by a partial section of a hollow cylinder surface.

## Revendications

1. Procédé d'assemblage d'une robinetterie (2), plus particulièrement d'un clapet d'arrêt, d'une soupape d'étranglement ou d'une vanne papillon, avec un élément tubulaire (3, 4) et avec une liaison par bride (5), dans lequel les étapes suivantes sont exécutées :
- mise à disposition de la robinetterie (2) avec une surface d'étanchéité plane (19) et plusieurs ouvertures de logement (8) disposées de manière répartie sur la circonférence externe, dans lequel la surface d'étanchéité (19) est orientée dans la direction perpendiculaire par rapport à un axe longitudinal (13) de la robinetterie (2) ;
- mise à disposition d'un élément tubulaire (3, 4) avec une surface frontale (20, 27) pouvant être orientée vers la surface d'étanchéité (19) de la robinetterie (2), et avec un col (21, 28), dans lequel le col (21, 28) est réalisé, sur sa circonférence externe, avec une surface de col externe (22, 29) et la surface frontale (20, 27) est orientée dans une direction perpendiculaire par rapport à un axe longitudinal (14, 15) de l'élément tubulaire (3, 4) ;
- mise à disposition d'une bride annulaire libre (11, 12) avec plusieurs ouvertures de passage (9, 10) réparties sur la circonférence ;
- mise à disposition d'un dispositif de centrage (1), comprenant au moins deux éléments de centrage (6) et au moins quatre tiges de centrage (16), dans lequel, dans chacun des éléments de centrage (6), sont réalisées au moins deux ouvertures de centrage (7) et les ouvertures de centrage (7) sont disposées chacune à une distance normale égale de deux ouvertures de logement (8) de la robinetterie (2), disposées l'une derrière l'autre dans la direction circonférentielle, ainsi que de deux ouvertures de passage (9, 10) de la bride annulaire libre (11, 12), disposées l'une derrière l'autre dans la direction circonférentielle et chacun des éléments de centrage (6) est conçu avec une surface d'orientation (17) pouvant être orientée vers la surface de col externe (22, 29) du col (21, 28) ;
- mise à disposition de plusieurs éléments de liaison (23), ces éléments de liaison (23) permettant la liaison de la bride annulaire libre (11, 12) avec la robinetterie (2) ;
- disposition, de manière distante entre eux sur la circonférence, des au moins deux éléments de centrage (6) sur la robinetterie (2) dans une position coaxiale de leurs ouvertures de centrage (7) par rapport aux ouvertures de logement (8) dans la robinetterie (2) ;
- insertion des tiges de centrage (16) dans les ouvertures de centrage (7) des éléments de centrage (6) ainsi que dans les ouvertures de logement (8) de la robinetterie (2) ;
- déplacement de l'élément tubulaire (3, 4) entre les au moins deux éléments de centrage (6) et alignement de la surface externe (22, 29) du col (21, 28) avec les surfaces d'orientation (17) des éléments de centrage (6) ;
- pose de la bride annulaire libre (11, 12) sur l'élément tubulaire (3, 4) et alignement de la bride annulaire libre (11, 12) avec les tiges de centrage (16) en logeant les tiges de centrage (16) dans les ouvertures de passage (9, 10) respectives de la bride annulaire libre (11, 12) ;
- insertion de plusieurs des éléments de liaison (23) dans des ouvertures de passage (9, 10) encore libres de la bride annulaire libre (11, 12) ainsi que dans des ouvertures de logement (8) correspondantes de la robinetterie (2) et serrage des éléments de liaison (23) ;
- retrait du dispositif de centrage (1) ;
- insertion d'autres éléments de liaison (23) dans les ouvertures de passage (9, 10) restantes encore libres de la bride annulaire libre (11, 12) ainsi que dans les ouvertures de logement (8) correspondantes de la robinetterie (2) et serrage des autres éléments de liaison (23).

2. Procédé selon la revendication 1, **caractérisé en ce que** l'axe longitudinal (14, 15) de l'élément tubulaire (3, 4) est orienté dans une orientation coaxiale par rapport à l'axe longitudinal (13) de la robinetterie (2).

3. Procédé selon la revendication 1 ou 2, **caractérisé en ce que**, entre la surface d'étanchéité (19) de la robinetterie (2) et la surface frontale (20, 27), orientée vers celle-ci, de l'élément tubulaire (3, 4), est inséré au moins un élément d'étanchéité (32).

4. Procédé selon l'une des revendications précédentes, **caractérisé en ce que** les ouvertures de logement (8) disposées dans la robinetterie (2) sont constituées de perçages filetés.

5. Procédé selon l'une des revendications précédentes, **caractérisé en ce que** les tiges de centrage (16) du dispositif de centrage (1) sont réalisées chacune avec une première partie (24) et une deuxième partie (25) suivant celle-ci dans la direction axiale, dans lequel la première partie (24) est munie d'un filetage externe et la deuxième partie (25) est lisse et de forme cylindrique.

6. Procédé selon l'une des revendications précédentes, **caractérisé en ce que** les tiges de centrage (16) du dispositif de centrage (1) sont réalisées chacune, sur le côté opposé à la première partie (24), avec une section transversale carrée ou hexagonale.

7. Procédé selon l'une des revendications précédentes, **caractérisé en ce que**, dans le cas d'une position de la bride annulaire libre (11, 12) posée sur le col (21) de l'élément tubulaire (3, 4) dans la direction axiale, un interstice axial est réalisé entre au moins une surface de bride (26, 30) orientée vers les éléments de centrage (6) et les éléments de centrage (6).

8. Procédé d'assemblage de deux éléments tubulaires (3, 4) et d'une liaison par bride (5), dans lequel les étapes suivantes sont exécutées :
- mise à disposition d'un premier élément tubulaire (3) avec une première surface frontale (20) et avec un premier col (21), dans lequel le premier col (21) est réalisé, sur sa circonférence externe, avec une première surface de col externe (22) et la première surface frontale (20) est orientée perpendiculairement par rapport à un premier axe longitudinal (14) du premier élément tubulaire (3) ;
- mise à disposition d'un deuxième élément tubulaire (4) avec une deuxième surface frontale (27) et un avec un deuxième col (28), dans lequel le deuxième col (28) est réalisé, sur sa circonférence externe, avec une deuxième surface de col externe (29) et la deuxième surface frontale (27) est orientée perpendiculairement par rapport à un deuxième axe longitudinal (15) du deuxième élément tubulaire (4) ;
- mise à disposition d'une première bride annulaire libre (11) avec plusieurs premières ouvertures de passage (9) réparties sur la circonférence ;
- mise à disposition d'une deuxième bride annulaire libre (12) avec plusieurs deuxièmes ouvertures de passage (10) réparties sur la circonférence ;
- mise à disposition d'un dispositif de centrage (1), comprenant au moins deux éléments de centrage (6) et au moins quatre tiges de centrage (16), dans lequel, dans chacun des éléments de centrage (6), sont réalisées au moins deux ouvertures de centrage (7) et les ouvertures de centrage (7) sont disposées chacune à une distance normale égale de deux premières et deuxièmes ouvertures de passage (9, 10), disposées l'une derrière l'autre dans la direction circonférentielle, des deux brides annulaires (11, 12) et chacun des éléments de centrage (6) est réalisé avec une surface d'orientation (17) pouvant être orientée vers la première et la deuxième surface de col externe (22, 29) du premier et du deuxième col (21, 28) ;
- mise à disposition de plusieurs éléments de liaison (23), ces éléments de liaison (23) permettant la liaison de la première bride annulaire libre (11) avec la deuxième bride annulaire (12) ;
- disposition, de manière distante entre eux sur la circonférence, des au moins deux éléments de centrage (6) sur la première bride annulaire libre (11) dans une position coaxiale de leurs ouvertures de centrage (7) par rapport aux premières ouvertures de passage (9) de la première bride annulaire libre (11) ;
- insertion des tiges de centrage (16) dans les ouvertures de centrage (7) des éléments de centrage (6) ainsi que dans les premières ouvertures de passage (9) de la première bride annulaire libre (11) et fixation des au moins deux éléments de centrage (6) ainsi que des tiges de centrage (16) sur la première bride annulaire libre (11) ;
- déplacement du premier élément tubulaire (3) entre les au moins deux éléments de centrage (6) et alignement de la première surface externe (22) du premier col (21) avec les surfaces d'orientation (17) des éléments de centrage (6) ;
- déplacement du deuxième élément tubulaire (4) entre les au moins deux éléments de centrage (6) et alignement de la deuxième surface externe (29) du deuxième col (28) avec les surfaces d'orientation (17) des éléments de centrage (6) ;
- pose de la deuxième bride annulaire libre (12) sur le deuxième élément tubulaire (4) et alignement de la deuxième bride annulaire libre (12) avec les tiges de centrage (16) en logeant les tiges de centrage (16) dans les deuxièmes ouvertures de passage (10) respectives de la deuxième bride annulaire libre (12) ;
- insertion de plusieurs des éléments de liaison (23) dans des premières ouvertures de passage (9) encore libres de la première bride annulaire libre (11) ainsi que dans les deuxièmes ouvertures de passage (10) correspondantes, également encore libres, de la deuxième bride annulaire libre (12) et serrage des éléments de liaison (23) ;
- retrait du dispositif de centrage (1) ;
- insertion d'autres éléments de liaison (23) dans les premières ouvertures de passage (9) restantes encore libres de la première bride annulaire libre (11) ainsi que dans les deuxièmes ouvertures de passage (10) correspondantes, également encore libre, de la deuxième bride annulaire libre (12) et serrage des autres éléments de liaison (23).

9. Procédé selon la revendication 8, **caractérisé en ce que** les deux éléments tubulaires (3, 4) sont déplacés entre les au moins deux éléments de centrage (6) dans une position en appui l'un contre l'autre au niveau de leurs surfaces frontales (20, 27).

10. Procédé selon la revendication 8 ou 9, **caractérisé en ce que** le premier axe longitudinal (14) du premier élément tubulaire (3) est orienté de manière coaxiale par rapport au deuxième axe longitudinal (15) de l'élément tubulaire (4).

11. Procédé selon l'une des revendications 8 à 10, **caractérisé en ce que**, entre la première surface frontale (20) du premier élément tubulaire (3) et la deuxième surface frontale (27), orientée vers celle-ci, du deuxième élément tubulaires (4), est inséré au moins un élément d'étanchéité (32).

12. Procédé selon l'une des revendications 8 à 11, **caractérisé en ce que**, dans le cas d'une position de la première bride annulaire libre (11) posée sur le premier col (21) du premier élément tubulaire (3) et dans le cas d'une position de la deuxième bride annulaire libre (12) posée sur le deuxième col (28) du deuxième élément tubulaire (4) entre les éléments de centrage (6) et au moins une surface de bride (26, 30) orientée vers les éléments de centrage (6), un interstice axial est formé.

13. Procédé selon l'une des revendications précédentes, **caractérisé en ce que**, dans le cas d'un nombre choisi de deux éléments de centrage (6), les éléments de centrages (6) sont disposés dans des positions diamétralement opposées.

14. Procédé selon l'une des revendications 1 à 12, **caractérisé en ce que**, dans le cas d'un nombre choisi de plus de deux éléments de centrage (6), les éléments de centrages (6) sont répartis sur la circonférence, plus particulièrement de manière régulière sur la circonférence.

15. Procédé selon l'une des revendications précédentes, **caractérisé en ce que** la surface d'orientation (17) de l'élément de centrage (6) est constitué d'une partie d'une surface cylindrique creuse.
